# EUROPEAN PATENT APPLICATION

(11) **EP 4 844 648 A1**
(43) Date of publication of application: **25.11.2026**
(21) Application number: 26156006.4
(22) Date of filing: 03.02.2026
(51) Int. Cl.: G06Q 10/063, G06Q 10/20, G06Q 10/10

(54) **DATA GENERATION APPARATUS, DATA GENERATION METHOD AND STORAGE MEDIUM FOR STORING DATA GENERATION PROGRAM**

(30) Priority: 22.05.2025 JP 2025085293
(71) Applicant: Hitachi, Ltd., Tokyo 100-8280 (JP)
(72) Inventor: WATANABE, Junya, Tokyo 100-8280 (JP)
(74) Representative: Manitz Finsterwald Patent- und Rechtsanwaltspartnerschaft mbB

(57) **Abstract**

The data generation apparatus includes: a storage section that stores first information including at least one of asset information on an asset, worker information on a worker performing a task and task information representing details of the task on equipment, and simulation input data for simulating an operation performed on a basis of the first information; an input section that inputs second information including at least one of the asset information, the worker information and the task information; an extraction section that calculates a degree of similarity between the first information and the second information and extracts the simulation input data associated with the first information similar to the second information; a modification section that modifies the simulation input data extracted based on the second information; and an output section that outputs the simulation input data modified.

## Description

### BACKGROUND OF THE INVENTION

The present invention relates to a data generation apparatus and a data generation method for reproducing a status of a maintenance project on a computer, as well as a storage medium for storing a data generation program, for the purpose of designing and improving maintenance operations.

A lot of equipment, including social infrastructure, is experiencing accelerated deterioration. Safe and stable operation of the equipment requires a greater emphasis on equipment maintenance. Operations with respect to equipment maintenance include various tasks such as inspection tasks and state monitoring tasks to check the state of equipment, preventive maintenance tasks to keep equipment functions normal and repair tasks to restore equipment when a failure occurs. Workers with a specific skill perform the task at a predetermined interval. In recent years, a declining birthrate and an aging population have led to a more serious shortage of workers also in maintenance operations. Optimizing the design of maintenance operations and properly implementing equipment maintenance with a minimum number of workers are important. In optimizing maintenance operations, operation simulation is an effective method for predicting the status of equipment operations and the status of the task being performed by workers by reproducing the state of maintenance projects under various future scenarios on a computer. The use of operation simulations, assuming various scenarios that are not easily tested in the real world, enables the evaluation of their impacts, effects and risks. Operation simulations include, for example, quantifying the effects of introducing new technologies such as predictive diagnostic systems or robots, quantifying the risks after the retirement of a skilled technician and examining the number and assignment of workers required to maintain the current state of equipment operations. This enables specific measures for optimizing operations to be quantitatively examined, thereby supporting the optimization of operations. When utilizing such operation simulations, developing a simulation model that accurately reproduces the real world and setting up the simulation in an appropriate manner are important. A method for appropriately performing an operation simulation is described in Japanese Unexamined Patent Application Publication No. 2023-101205.

Japanese Unexamined Patent Application Publication No. 2023-101205 discloses a maintenance improvement supporting apparatus including: a simulation setting generation section that generates setting information for performing a simulation of a maintenance operation based on a maintenance operation log database, which is an execution record of the maintenance operation, including an asset that is a maintenance target in the maintenance operation, a worker responsible for the maintenance operation and a task that is the maintenance operation performed by the worker on the asset; a simulation section that executes the simulation of the maintenance operation using an asset agent, which is an agent representing the asset, and a worker agent, which is an agent representing the worker; and a reproducibility improvement processing section that detects a state of the asset agent or the worker agent violating a rule in an operation knowledge database including a rule for executing the maintenance operation and modifies the setting information.

### SUMMARY OF THE INVENTION

The execution of the simulation of the maintenance operation requires the creation of input data structured in a format compatible with a simulation program, based on a wide variety of information with respect to a maintenance service. The information with respect to the maintenance service includes, for example, information on the equipment that is the maintenance target, information on maintenance tasks for target equipment and information on the worker performing the maintenance tasks. The creation of the input data to be input to the simulation from a vast amount of information is not easy.

Japanese Unexamined Patent Application Publication No. 2023-101205 described above describes a method for detecting a simulation setting that violates the rule to correct the simulation setting. However, there is no mechanism to facilitate the task of creating structured data required for the operation simulation itself.

The present invention therefore provides a data generation apparatus and a data generation method that enable a user to easily perform the simulation, as well as a storage medium for storing a data generation program.

To solve the problem described above, a data generation apparatus according to the present invention includes: a storage section that stores first information including at least asset information on an asset that is a task target, worker information on a worker performing a task and task information representing details of the task on equipment, and simulation input data for simulating an operation performed on a basis of the first information; an input section that inputs second information including at least one of the asset information, the worker information and the task information; an extraction section that calculates a degree of similarity between the first information and the second information and extracts the simulation input data associated with the first information similar to the second information; a modification section that modifies the simulation input data extracted based on the second information; and an output section that outputs the simulation input data modified.

A data generation method according to the present invention includes: storing first information including at least asset information on an asset that is a task target, worker information on a worker performing a task and task information representing details of the task on equipment, and simulation input data for simulating an operation performed on a basis of the first information in a storage section in advance; and receiving second information including at least one of the asset information, the worker information and the task information from an input section, in which a similarity simulation extraction section calculates a degree of similarity between the first information and the second information and extracts the simulation input data associated with the first information similar to the second information, a simulation input data modification section modifies the simulation input data extracted based on the second information, and an output section outputs the simulation input data modified.

A storage medium for storing a data generation program according to the present invention stores the data generation program for causing a central control device to execute: a function of storing first information including at least asset information on an asset that is a task target, worker information on a worker performing a task and task information representing details of the task on equipment, and simulation input data for simulating an operation performed on a basis of the first information in a storage section; a function of inputting second information including at least one of the asset information, the worker information and the task information; a function of calculating a degree of similarity between the first information and the second information and extracting the simulation input data associated with the first information similar to the second information; a function of modifying the simulation input data extracted based on the second information; and a function of outputting the simulation input data modified.

According to the present invention, a data generation apparatus and a data generation method that enable a user to easily perform a simulation, as well as a storage medium for storing a data generation program, can be provided.

For example, input data for an operation simulation can be easily created using natural language. Therefore, even a user who has no expertise in simulation can easily use the data generation apparatus.

Objects, configurations, and effects other than the above will be apparent from the description of the following embodiments.

### BRIEF DESCRIPTION OF THE DRAWINGS

FIG. 1 is a functional block diagram of a data generation apparatus according to First Embodiment according to the present invention,
FIG. 2 is a hardware configuration diagram of the data generation apparatus according to First Embodiment according to the present invention,
FIG. 3 is a diagram illustrating an example of first information and simulation input data to be stored in a storage section shown in FIG. 1,
FIG. 4 is a diagram illustrating an example of second information to be input by a user,
FIG. 5 is a diagram illustrating an example of a method for calculating a degree of similarity between the first information and the second information, and
FIG. 6 is a diagram illustrating an example of an input and output screen configured to interact with a user.

### DETAILED DESCRIPTION OF THE PREFERRED EMBODIMENTS

In the present specification, "maintenance operations" may include not only tasks directly related to equipment maintenance such as "inspection," "repair," "servicing," "replacement," "installation" and "disposal" but also indirect operations such as "meetings," "record-keeping," "sales" and "clerical tasks." Assets targeted for the "maintenance operations" include various items such as "equipment," "instruments," "machinery" and "products." An "operation" is composed of a plurality of "tasks." A case in which "equipment" is used as an asset is described below as an example.

An embodiment according to the present invention is described below with reference to the drawings.

### First Embodiment

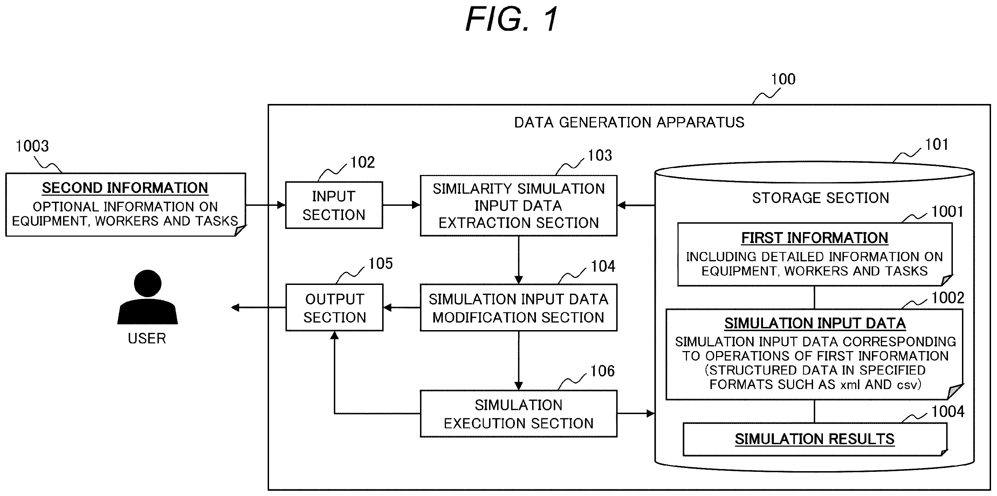

FIG. 1 is a functional block diagram of a data generation apparatus according to First Embodiment according to the present invention. As shown in FIG. 1, the data generation apparatus 100 includes a storage section 101, an input section 102, a similarity simulation input data extraction section 103, a simulation input data modification section 104, an output section 105 and a simulation execution section 106.

Here, the data generation apparatus 100 according to the present embodiment is assumed to be an apparatus that executes a simulation of a maintenance operation using agent simulation. In agent simulation, each actor in the real world is represented by a model called an agent. For example, in a case of agent simulation for maintenance operations, for each management unit such as equipment or a part of equipment in the real world, data for the equipment and the part that also correspond to the simulation world are generated for each individual actor, which autonomously operates or fails to reproduce behavior of equipment in the real world. The data generated at this time are referred to as an agent, and in a case of equipment, which is an asset, it is referred to as an equipment agent. Similarly, an agent is generated for each of maintenance workers in the simulation world, which is referred to as a worker agent. The worker agent performs a task that is specified in task information. Tasks may include not only maintenance tasks on equipment but also waiting, moving and resting. In this way, simulating behavior such as an operation of equipment and occurrence of failures, as well as the behavior of the workers performing tasks on a computer and recording a time when each event occurs enables indicators such as an equipment operating rate, and task status and workload intensity of the workers to be predicted.

The storage section 101 holds first information 1001, which includes the equipment and the workers required to set conditions and scenarios for the simulation, as well as the task information representing details of a task on the equipment, and simulation input data 1002, which is required to be input into a simulation program to execute an operation simulation defined in the first information. It also holds corresponding simulation results 1004 if any results exist from executing the operation simulation using the simulation input data 1002.

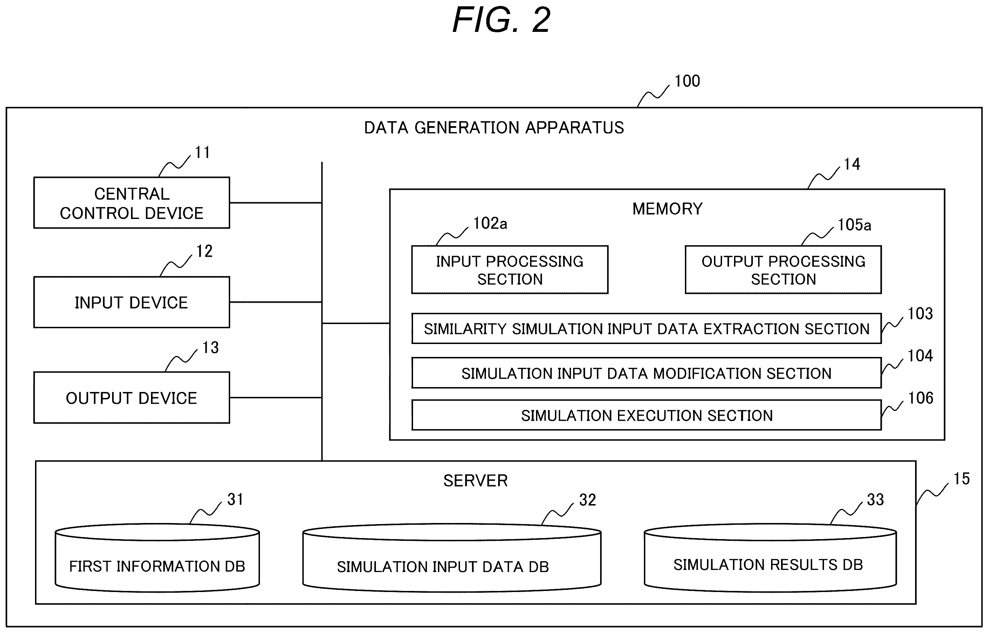

FIG. 2 is a hardware configuration diagram of the data generation apparatus according to First Embodiment according to the present invention. As shown in FIG. 2, the data generation apparatus 100 includes a central control device 11, an input device 12, an output device 13, a memory 14 and a server 15. The central control device 11 includes a central processing unit (CPU) as an arithmetic device, a random access memory (RAM) as a main storage device, a hard disk drive (HDD) or a solid-state drive (SSD) as an auxiliary storage device, and the like. The similarity simulation input data extraction section 103, the simulation input data modification section 104 and the simulation execution section 106 in FIG. 1 perform a similarity simulation input data extraction process, a simulation input data modification process and the simulation described below, respectively, by the central control device 11 reading out a program stored in advance in the similarity simulation input data extraction section 103, the simulation input data modification section 104 and the simulation execution section 106 to the memory 14 to load it to the RAM, which is not shown in the figure, and executing it by the CPU.

As shown in FIG. 2, in the server 15, a first information database 31, a simulation input data database 32 and a simulation results database 33 are each stored separately in partitioned storage areas.

The input device 12 is composed of, for example, a keyboard, a mouse, or the like, and the output device 13 includes a display device such as a liquid crystal display or an organic EL display. An input processing section 102a and an output processing section 105a in the memory 14 are programs that realize functions of the input section 102 and the output section 105 in FIG. 1.

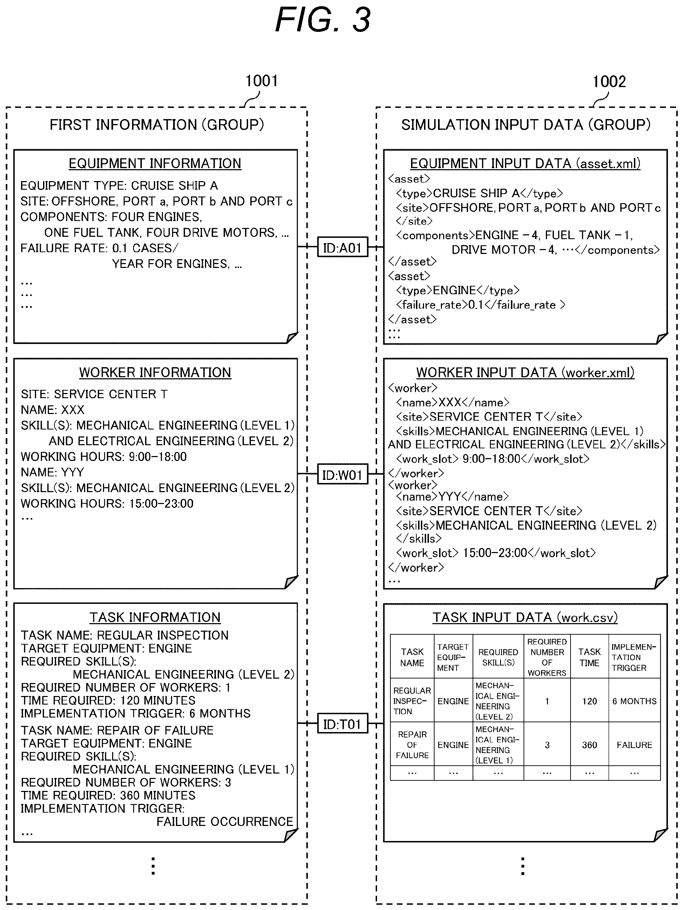

FIG. 3 is a diagram illustrating an example of the first information and the simulation input data to be stored in the storage section shown in FIG. 1. The first information 1001 on the left side of FIG. 3 consists of text files that describe information on the equipment, information on the workers and information on the tasks required for setting the conditions and the scenarios for the simulation of the maintenance operation. In FIG. 3, although one information file is shown for each of the equipment, the workers and the tasks, which represent the first information 1001, these files may be multiple for each.

FIG. 3 describes an example of a certain cruise ship as equipment information, which represents the first information 1001. The equipment information describes an "equipment name," an "installation site," an "equipment component" and a "failure rate," which are used as parameters for determining the behavior of the equipment in the simulation. Note that the equipment information may be created at the level of an arbitrary part that is to be the component of the equipment. For example, the equipment information may be created individually for each of the components such as an engine, a fuel tank and a drive motor included in Cruise Ship A in FIG. 3. Preparing a large number of pieces of equipment information at the component level enables more diverse and complex equipment to be reproduced through their combinations, thereby expanding the scope of application of simulation targets.

FIG. 3 describes an example of worker information for workers enrolled at a certain service center as the worker information. The worker information describes a "name," "skill(s) possessed" and "working hours," which are used as parameters for determining the behavior of the workers in the simulation. Although one worker information file is created for each service center in this example, one worker information file may be created separately for each individual worker. Alternatively, it may be a single file with a plurality of service centers combined.

FIG. 3 describes a "task name," "target equipment for the task," "required skill(s) for the task," a "required number of workers for the task," a "time required for the task" and a "condition for performing the task (an implementation trigger)" as task information, which are used as parameters for the task to be performed in the simulation. Although this example only describes the task information on the engine, the tasks for a plurality of pieces of equipment may be described collectively in a single file.

The simulation input data 1002 on the right side of FIG. 3 are data to be directly input into the operation simulation and are associated with the first information 1001 via identification IDs. The simulation input data are structured data that are required to be written in a specific format readable by the simulation program. In this example, equipment input data and worker input data are in XML format, while task input data in CSV format. Items and content in the simulation input data correspond to the content of the first information 1001 that is associated with the identification IDs. Note that although the first information 1001 is text information in free format in the example of FIG. 3, which is visually easy for humans to read and easy to write, the simulation input data may be used as is.

Note that the storage section 101 may also be configured to store a plurality of pieces of first information 1001 and a plurality of sets of simulation input data 1002.

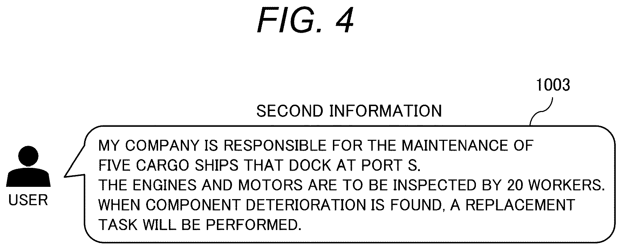

The input section 102 (FIG. 1) receives second information 1003 including at least one of asset information, the worker information and the task information from a user. FIG. 4 is a diagram illustrating an example of the second information to be input by the user. In the example of FIG. 4, the user inputs information on maintenance of cargo ships performed by his/her company in natural language format using the input device 12 (FIG. 2), which is received by the input section 102 (FIG. 1) as the second information 1003. In the example of FIG. 4, the user inputs in natural language format, "My company is responsible for the maintenance of five cargo ships that dock at Port S. The engines and motors are to be inspected by 20 workers. When component deterioration is found, a replacement task will be performed."

The similarity simulation input data extraction section 103 shown in FIG. 1 compares the first information 1001 stored in the storage section 101 with the second information 1003 received by the input section 102, calculates a degree of similarity and extracts the simulation input data associated with the first information 1001 with a high degree of similarity.

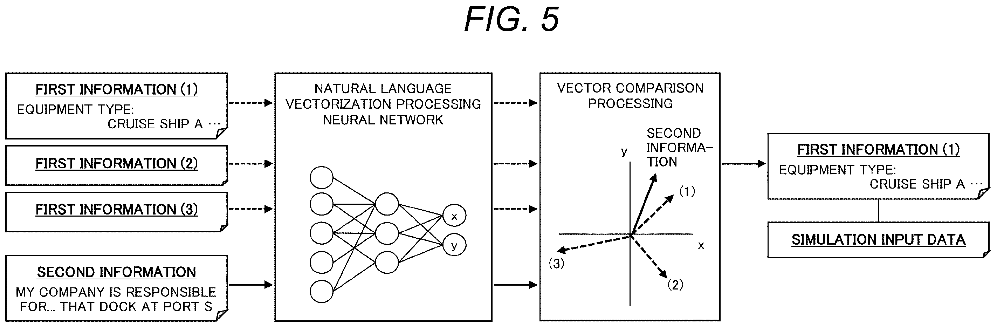

FIG. 5 is a diagram illustrating an example of a method for calculating the degree of similarity between the first information and the second information. As shown in FIG. 5, the first information 1001 and the second information 1003 are each input into a neural network that performs natural language vectorization processing to calculate a feature value vector (x, y) as its output. Next, comparing the feature value vectors calculated for each allows the first information 1001 that is most similar to the second information 1003 to be selected. In the example of FIG. 5, first information (1) is the first information 1001 that is most similar to the second information 1003. The first information 1001 extracted in this manner with a high degree of similarity and the simulation input data 1002 associated with it are passed to the simulation input data modification section 104. Note that the first information 1001 stored in the storage section 101 does not need to be input into the neural network each time and is preferably input once in advance and stored in vector format in the storage section 101. This reduces processing volume and computation time.

The simulation input data modification section 104 shown in FIG. 1 receives the simulation input data 1002 associated with the second information 1003 input by the user and the first information 1001 with a high degree of similarity to the second information 1003 and modifies the content of the simulation input data 1002 associated with the first information 1001 in accordance with the content of the second information 1003. For example, in the case of the example of FIGS. 3 and 4, a "cruise ship" in the equipment input data is to be modified to a "cargo ship." The second information 1003 does not necessarily include all the items that the first information 1001 includes. The example of FIG. 4 represents a case of general description, in other words, a case in which information is input in natural language format and, for example, lacks information on the "failure rate" with respect to the equipment. It lacks information on the "skill(s)" with respect to the workers. It lacks information on the "required skill(s)" and the "required number of workers" with respect to the task. Identifying these missing items in the second information 1003 input by the user provides the user with an instruction for further input by indicating that the information is missing. This improves the accuracy of the simulation input data 1002.

The simulation execution section 106 shown in FIG. 1 receives the simulation input data 1002 modified by the simulation input data modification section 104 and executes the simulation program. The simulation results are to be stored in the storage section 101 together with the simulation input data 1002. Execution status of the simulation and information on a storage location of the simulation results are to be sent to the output section 105.

The output section 105 receives the information on the simulation input data modified by the simulation input data modification section 104, as well as the simulation execution status of the simulation execution section 106 and the information on the storage location of the simulation results and presents the information to the user via a display instrument such as a display.

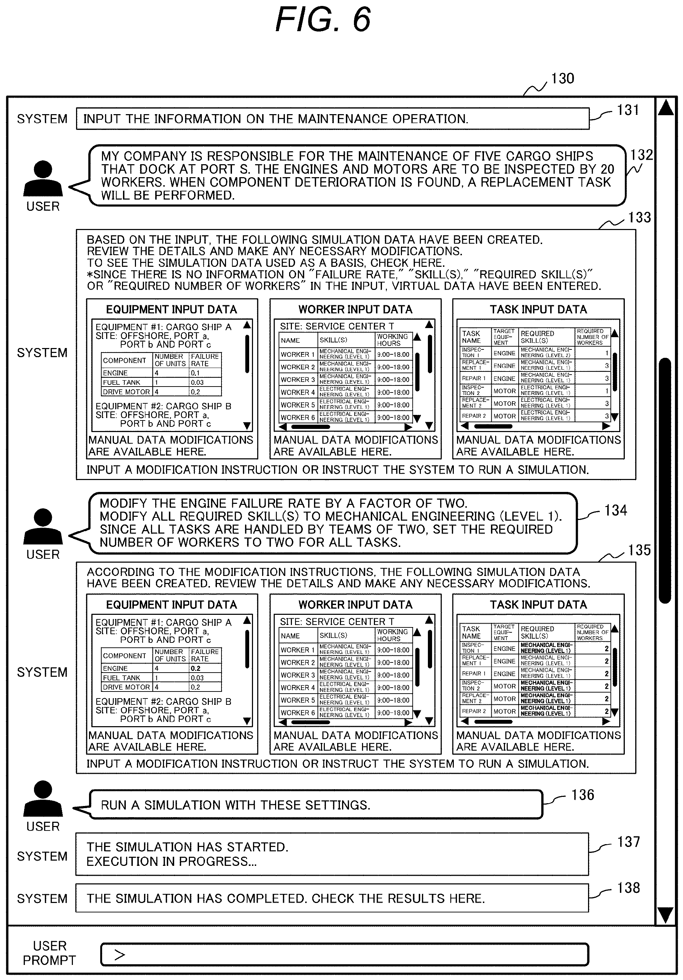

FIG. 6 is a diagram illustrating an example of an input and output screen configured to interact with the user. FIG. 6 shows an example of the input and output screen 130 that constitutes the output device 13, which interacts with the user in chat format to perform processes from creating input data for the operation simulation to executing it. FIG. 6 displays a history of interactions between a system and the user in chronological order from top to bottom. It shows a prompt input window at the bottom, which serves as the input section for the user to chat with the system. The content input is displayed in speech bubbles marked with a "user" symbol in the history of interactions with the system at the top of FIG. 6. Dialogues of the system to the user are displayed in boxes shown next to a "system" symbol.

In the example of FIG. 6, the system first instructs the user to input information on the maintenance operation in a display area 131. The user inputs an input of the example of FIG. 4 into a display area 132, then the system presents the simulation input data 1002 created by modifying similarity simulation input data in the box (a display area 133). In the example of FIG. 6, created data are displayed as the equipment input data, the worker input data and the task input data. Below each data display, a link to a screen for manually modifying data is shown as a bold and underlined "here," allowing the user to directly modify the data. The second line in the box (the display area 133) provides a link indicated by a bold and underlined "here" to the data with a high degree of similarity extracted by the similarity simulation input data extraction section 103, allowing the user to check the details of reference data. This enables the user to check in advance whether they have a similarity to the maintenance operation that he/she envisions, thereby improving the accuracy of the simulation input data 1002. The third line of the box (the display area 133) presents the missing items in the second information 1003 identified by the simulation input data modification section 104 to the user and prompts him/her to check them. This reduces errors in the simulation input data and prompts the user to make further modifications. Specifically, as indicated by the text, "*Since there is no information on 'Failure rate,' 'Skill(s),' 'Required skill(s)' or 'Required number of workers' in the input, virtual data have been entered," the second information 1003 to be input by the user is compared with the first information 1001 stored in advance in the storage section 101, the missing items in the second information 1003 are identified, and the missing items are displayed on the input and output screen 130.

Then, the user inputs a modification instruction for the "failure rate" of the engine, the "required skill(s)" for the task and the "required number of workers." Specifically, he/she inputs the text, "Modify the engine failure rate by a factor of two. Modify all required skill(s) to Mechanical Engineering (Level 1). Since all tasks are handled by teams of two, set the required number of workers to two for all tasks," into a display area 134. The system presents anew the content modified based on the modification instruction by the user in a display area 135. Modified items are displayed in bold to make them easier for the user to identify. Then, the user inputs a request in a display area 136 to execute the simulation based on the content of the simulation input data 1002 presented. The system initiates the simulation upon receiving the instruction and displays a message indicating the execution while it is running. When the simulation ends, the system displays a message to the user in a display area 137 indicating that the simulation has completed and provides a link indicated by a bold and underlined "here" in a display area 138 for the user to access the simulation results.

Executing the simulation through interaction with the system in an interactive manner as described above allows the user to instruct modifications after sequentially checking the content of the data, enabling even a user who has no expertise in simulation to easily execute the simulation while being guided by the system.

Note that in a case in which the second information 1003 to be input by the user is only information on the "equipment," the information on the "worker" and the information on the "tasks" corresponding to the "equipment" information that are similar are displayed in tabular format as defaults from the first information database 31 (FIG. 2), and the user is prompted to manually modify the information on the "worker" and the "tasks," specifically, the "name," the "skill(s)" and the "working hours" in a case of, for example, the "worker." Alternatively, in a case of the "tasks," the user is prompted to manually modify a "task name," the "target equipment," the "required skill(s)" and the "required number of workers."

In a case in which the second information 1003 to be input by the user is only information on the "worker," the information on the "equipment" and the information on the "tasks" corresponding to the "worker" information that are similar are displayed in tabular format as defaults from the first information database 31 (FIG. 2), and the user is prompted to manually modify the information on the "equipment" and the "tasks," specifically, the "component," the "number of units" and the "failure rate" in a case of, for example, the "equipment." Alternatively, in the case of the "tasks," the user is prompted to manually modify the "target equipment," the "required skill(s)" and the "required number of workers."

In a case in which the second information 1003 to be input by the user is only information on the "tasks," the information on the "equipment" and the information on the "worker" corresponding to the "task" information that are similar are displayed in tabular format as defaults from the first information database 31 (FIG. 2), and the user is prompted to manually modify the information on the "equipment" and the "worker," specifically, the "component," the "number of units" and the "failure rate" in the case of, for example, the "equipment." Alternatively, in a case of the "worker," the user is prompted to manually modify the "skill(s)" and the "working hours."

The fact that the "equipment information," the "worker information" and the "task information" are associated with one another as the first information 1001, which are stored in advance in the first information database 31, provides the default display for the user to perform the selection described above. In other words, the first information database 31 functions as a relational database.

According to the present embodiment, a data generation apparatus and a data generation method that enable a user to easily perform a simulation, as well as a storage medium for storing a data generation program, can be provided as described above.

For example, input data for an operation simulation can be easily created using natural language. Therefore, even a user who has no expertise in simulation can easily use the data generation apparatus.

In addition, the simulation input data can be automatically created based on arbitrary input information from the user, using the simulation input data that are similar as a template. This enables the user to input in ambiguous natural language, allowing him/her to easily use a highly professional data generation apparatus.

Note that the present invention is not limited to the embodiment described above and includes various modifications. For example, the embodiment described above has been described in detail to simply describe the present invention and is not necessarily limited to those having all the described configurations.

### REFERENCE SIGNS LIST

11: central control device
12: input device
13: output device
14: memory
15: server
31: first information database
32: simulation input data database
33: simulation results database
100: data generation apparatus
101: storage section
102: input section
102a: input processing section
103: similarity simulation input data extraction section
104: simulation input data modification section
105: output section
105a: output processing section
106: simulation execution section
130: input and output screen
131 to 138: display area
1001: first information
1002: simulation input data
1003: second information
1004: simulation results

## Claims

1. A data generation apparatus comprising:
a storage section that stores first information including at least asset information on an asset that is a task target, worker information on a worker performing a task and task information representing details of the task on equipment, and simulation input data for simulating an operation performed on a basis of the first information;
an input section that inputs second information including at least one of the asset information, the worker information and the task information;
an extraction section that calculates a degree of similarity between the first information and the second information and extracts the simulation input data associated with the first information similar to the second information;
a modification section that modifies the simulation input data extracted based on the second information; and
an output section that outputs the simulation input data modified.

2. The data generation apparatus according to claim 1,
wherein the data generation apparatus comprises a simulation execution section that executes a simulation using the simulation input data modified.

3. The data generation apparatus according to claim 2,
wherein the input section receives a user instruction with respect to the simulation input data modified, and
the modification section modifies the simulation input data modified based on the user instruction.

4. The data generation apparatus according to claim 3,
wherein the storage section stores a plurality of pieces of the first information and a plurality of sets of simulation input data.

5. The data generation apparatus according to claim 3,
wherein the second information is input in natural language format, and the extraction section calculates the degree of similarity between the first information and the second information through natural language processing.

6. The data generation apparatus according to claim 5,
wherein the modification section identifies a missing item in the second information by comparing the second information with the first information, and the output section outputs the missing item.

7. The data generation apparatus according to claim 6,
wherein the output section outputs the first information extracted by the extraction section and information on the simulation input data.

8. A data generation method comprising:
storing first information including at least asset information on an asset that is a task target, worker information on a worker performing a task and task information representing details of the task on equipment, and simulation input data for simulating an operation performed on a basis of the first information in a storage section in advance;
receiving second information including at least one of the asset information, the worker information and the task information from an input section;
causing a similarity simulation extraction section to calculate a degree of similarity between the first information and the second information and extract the simulation input data associated with the first information similar to the second information;
causing a simulation input data modification section to modify the simulation input data extracted based on the second information; and
causing an output section to output the simulation input data modified.

9. A storage medium for storing a data generation
program that causes a central control device to execute:
a function of storing first information including at least asset information on an asset that is a task target, worker information on a worker performing a task and task information representing details of the task on equipment, and simulation input data for simulating an operation performed on a basis of the first information in a storage section;
a function of inputting second information including at least one of the asset information, the worker information and the task information;
a function of calculating a degree of similarity between the first information and the second information and extracting the simulation input data associated with the first information similar to the second information;
a function of modifying the simulation input data extracted based on the second information; and
a function of outputting the simulation input data modified.
